# EUROPÄISCHE PATENTANMELDUNG

(11) **EP 1 221 388 A2**
(43) Veröffentlichungstag der Anmeldung: **10.07.2002**
(21) Anmeldenummer: 01130536.4
(22) Anmeldetag: 21.12.2001
(51) Int. Cl.: B60H 1/24

(54) **Entlüftungsgitter für Fahrzeuge**

(30) Priorität: 05.01.2001 DE 20100157 U
(71) Anmelder: TRW Automotive Electronics & Components GmbH & Co. KG, 67677 Enkenbach/Alsenborn (DE)
(72) Erfinder: Demerath, Michael, 66909 Hüffler (DE)
(74) Vertreter: Degwert, Hartmut, Dipl.-Phys.

(57) **Zusammenfassung**

Entlüftungsgitter für Fahrzeuge, mit einer eine elektromagnetische Abschirmung bildenden Gitterstruktur (16a, 16b) aus Kunststoffteilen, die elektrisch leitfähig sind.

## Beschreibung

Die Erfindung betrifft ein Entlüftungsgitter für Fahrzeuge.

In modernen Fahrzeugen werden Entlüftungsgitter, die in die Karosserie eingesetzt werden, aus Kunststoff ausgebildet, weil gegenüber metallischen Ausführungen Gewicht und Kosten eingespart werden. Falls sich eine Antenne vor dem Entlüftungsgitter außerhalb der Karosserie befindet, kann es notwendig sein, diese elektromagnetisch abzuschirmen. Da die Karosserie im Bereich des aus Kunststoff bestehenden Entlüftungsgitters unterbrochen ist, wird die elektromagnetische Abschirmung durch ein zusätzlich eingesetztes Metallgitter geleistet. Das zusätzlich vorzusehende Metallgitter erhöht den Material- und Montageaufwand.

Durch die Erfindung wird ein Entlüftungsgitter für Fahrzeuge bereitgestellt, das die Vorteile einer Kunststoffausführung und zugleich die Eigenschaften einer elektromagnetischen Abschirmung hat.

Das erfindungsgemäße Entlüftungsgitter für Fahrzeuge hat eine, eine elektromagnetische Abschirmung bildende Gitterstruktur aus Kunststoffteilen, die elektrisch leitfähig sind. Durch die elektrische Leitfähigkeit der Kunststoffteile, aus denen die Gitterstruktur gebildet ist, wird bereits die elektromagnetische Abschirmfunktion gewährleistet. Die Kunststoffteile können auf vielfältige Weise elektrisch leitfähig gemacht werden. Im Rahmen der Erfindung sind folgende vorteilhafte Ausführungsformen vorgesehen, die einzeln oder in Kombination Anwendung finden können:
- Die Kunststoffteile sind durch Beimischen von elektrisch leitfähigen Partikeln in die Kunststoffmasse leitfähig gemacht;
- die Kunststoffteile sind durch Hinterspritzen einer Metallfolie mit Kunststoffmasse hergestellt;
- die Kunststoffteile sind durch eine metallische Beschichtung leitfähig gemacht;
- die Kunststoffteile weisen eine aufgespritzte Metallschicht auf;
- die Kunststoffteile haben eine galvanisch aufgebrachte Metallbeschichtung;
- die Gitterstruktur ist durch ein mit Kunststoffmasse umspritztes Metallgitter gebildet.

Vorzugsweise hat ferner das Entlüftungsgitter einen die Gitterstruktur umgebenden Rahmen, der in einer Öffnung der Fahrzeug-Karosserie eingesetzt werden kann. Alternativ ist das Entlüftungsgitter Bestandteil der Fahrzeug-Karosserie.

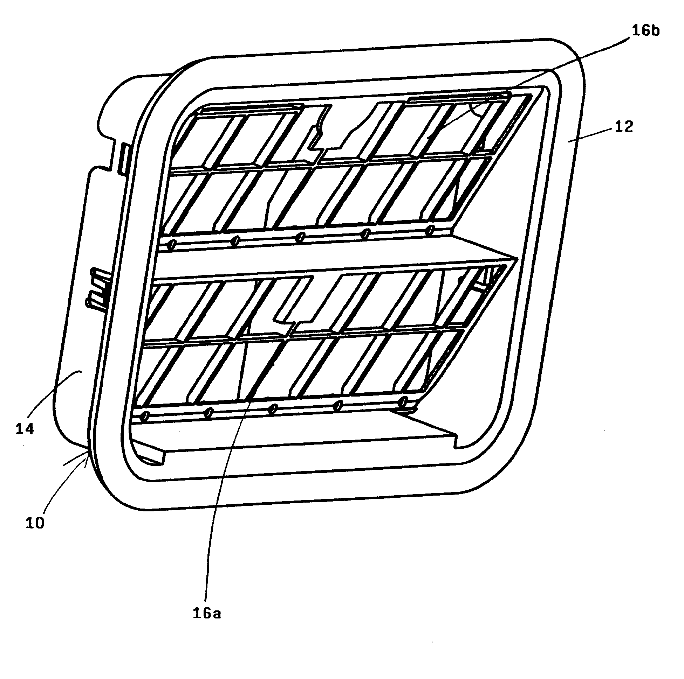

Die Erfindung wird nun anhand eines Ausführungsbeispiels näher erläutert. Die einzige Figur der beigefügten Zeichnung zeigt in Perspektive ein Entlüftungsgitter, das in eine Öffnung der Fahrzeug-Karosserie einsetzbar ist.

Das Entlüftungsgitter hat einen allgemein rechteckförmigen Rahmen, der in einer entsprechenden Öffnung der Fahrzeug-Karosserie verrastet wird. Dieser allgemein mit 10 bezeichnete Rahmen besteht aus einem Flansch 12 zur Anlage an der Außenfläche der Fahrzeug-Karosserie und einer an den Flansch anschließenden Kanalwandung 14, in der eine doppelte Gitterstruktur 16a, 16b befestigt ist, die den freien Durchgang des Kanals 14 überspannt. Diese Gitterstruktur 16a, 16b besteht aus Kunststoffteilen, die elektrisch leitfähig sind. Aufgrund der elektrischen Leitfähigkeit dieser Kunststoffteile, aus denen die Gitterstruktur 16a, 16b besteht, bildet diese eine elektromagnetische Abschirmung, welche die in der Fahrzeug-Karosserie ausgesparte Lücke schließt.

Die elektrische Leitfähigkeit der Kunststoffteile, aus denen die Gitterstruktur 16a, 16b besteht, wird bei einer vorteilhaften Ausführungsform der Erfindung dadurch hergestellt, daß der Kunststoffmasse elektrisch leitfähige Partikel beigemischt sind.

Gemäß einer anderen Ausführungsform ist die Gitterstruktur 16a, 16b durch ein mit Kunststoffmasse umspritztes Metallgitter gebildet.

Weitere Ausführungen im Rahmen der Erfindung sind:
- Ausbilden der Kunststoffteile der Gitterstruktur 16a, 16b durch Hinterspritzen einer Metallfolie mit Kunststoffmasse;
- die Kunststoffteile der Gitterstruktur 16a, 16b werden durch eine metallische Beschichtung leitfähig gemacht;
- die aus Kunststoff bestehende Gitterstruktur 16a, 16b wird durch eine aufgespritzte Metallschicht elektrisch leitfähig gemacht;
- die aus Kunststoff bestehende Gitterstruktur 16a, 16b erhält eine galvanisch aufgebrachte Beschichtung.

## Patentansprüche

1. Entlüftungsgitter für Fahrzeuge, mit einer eine elektromagnetische Abschirmung bildenden Gitterstruktur (16a, 16b) aus Kunststoffteilen, die elektrisch leitfähig sind.

2. Entlüftungsgitter nach Anspruch 1, mit einem die Gitterstruktur (16a, 16b) umgebenden Rahmen (10), der in eine Öffnung der Fahrzeug-Karosserie einsetzbar ist.

3. Entlüftungsgitter nach Anspruch 1, das Bestandteil der Fahrzeug-Karosserie ist.

4. Entlüftungsgitter nach einem der Ansprüche 1 bis 3, dessen Kunststoffteile durch Beimischen von elektrisch leitfähigen Partikeln in die Kunststoffmasse leitfähig gemacht sind.

5. Entlüftungsgitter nach einem der Ansprüche 1 bis 3, dessen Kunststoffteile durch Hinterspritzen einer Metallfolie mit Kunststoffmasse hergestellt sind.

6. Entlüftungsgitter nach einem der Ansprüche 1 bis 3, dessen Kunststoffteile durch eine metallische Beschichtung leitfähig gemacht sind.

7. Entlüftungsgitter nach einem der Ansprüche 1 bis 3, dessen Kunststoffteile eine aufgespritzte Metallschicht aufweisen.

8. Entlüftungsgitter nach einem der Ansprüche 1 bis 3, dessen Kunststoffteile eine galvanische Beschichtung aufweisen.

9. Entlüftungsgitter nach einem der Ansprüche 1 bis 3, dessen Gitterstruktur (16a, 16b) durch ein mit Kunststoffmasse umspritztes Metallgitter gebildet ist.
